# EUROPEAN PATENT APPLICATION

(11) **EP 2 477 025 A2**
(43) Date of publication of application: **18.07.2012**
(21) Application number: 12150799.0
(22) Date of filing: 11.01.2012
(51) Int. Cl.: G01N 21/27

(54) **Off-set compensation technique for dual analyzer gas exchange systems**

(30) Priority: 13.01.2011 US 201113005711
(71) Applicant: LI-COR, INC., Lincoln NE 68504 (US)
(72) Inventor: Welles, Jonathan, Lincoln, NE 68516 (US)
(74) Representative: Van Straaten, Joop

(57) **Abstract**

Systems, methods and sensor for a system of compensating analyzer offsets in a dual analyzer gas analysis systems. A flow swapping device when in a first configuration delivers the chamber influent to a first gas analyzer, and the chamber effluent delivered to a second gas analyzer. At any arbitrary time, the configuration of the flow swapping device can be switched wherein chamber influent is delivered to the second gas analyzer, and chamber effluent is delivered to the first gas analyzer. By changing the configuration of the match valve, the gas analyzer initially connected to the chamber effluent is connected to the chamber influent. Conversely, the gas analyzer initially connected to the chamber influent is connected to the chamber effluent enabling a determination of offset error between the analyzers. The various embodiments are approximately two-times faster than known methods for dual analyzer systems; the reduced time translates to an overall faster gas exchange measurement.

## Description

### BACKGROUND

The present invention relates generally to gas exchange measurement systems, and more particularly to open photosynthesis measurement systems having dual analyzers with an optimized flow swapping configuration to compensate for analyzer offset.

Plant photosynthesis, transpiration, and respiration measurements are commonly made by measuring gas exchange. Broadly, gas exchange measurements can be performed in open or closed systems. Open gas exchange systems place a portion, or sometimes the entirety, of the plant in a sample chamber. A flowing gas with known concentrations (CO₂ for photosynthesis and H₂O for respiration) is injected into the sample chamber at a known mass flow rate. This gas stream will be referred to later as the chamber influent. The gas concentrations are measured at the chamber exit, and this exit gas stream will be referred to later as the chamber effluent. Under steady state assumptions, the concentration differences between influent and effluent streams, along with the mass flow rate, are then used to calculate the rate of gas exchange (e.g. photosynthesis using the CO₂ difference and transpiration using the H₂O difference).

Gas exchange measurements of low photosynthesis and transpiration rates, especially on small leaf areas, requires accurate measurement of minute differences between influent and effluent concentrations. The calculated difference of these absolute concentrations is then used to calculate photosynthesis and transpiration rates.

Open gas exchange systems generally use either one or two gas analyzers. Single analyzer systems use valves to swap the flow through the single analyzer from the chamber influent to the chamber effluent, and back again. Dual analyzer systems use one analyzer to measure the chamber influent, and the other analyzer to measure chamber effluent.

A fundamental complication in dual analyzer systems is that one analyzer can be offset from the other. This offset is usually slowly varying, due to aging of the analyzer components or operating environment changes. Moreover, the offset can be a function of the absolute concentrations being measured. Any analyzer offset artificially appears as gas exchange. Thus, dual analyzer systems must have a mechanism for compensating these analyzer offsets. Single analyzer systems do not suffer from this, as both influent and effluent streams are measured by the same analyzer.

Therefore it is desirable to provide systems and methods that overcome the above and other problems.

### BRIEF SUMMARY

The present invention provides gas exchange measurement systems and methods using an optimized flow swapping configuration to compensate for dual analyzer offset error.

Various embodiments provide systems and methods of compensating analyzer offsets in a dual analyzer gas analysis systems. The various embodiments are approximately two-times faster than known methods for dual analyzer systems; the reduced time translates to an overall faster gas exchange measurement.

According to one aspect of the present invention, a gas exchange analysis system comprising a sensor is provided. Furthermore a sensor for use in a gas exchange analyses system is provided. The sensor typically includes a sample chamber defining a measurement volume for analysis of a sample, the sample chamber having a gas inlet port coupled with a gas source, and a gas outlet port. The sensor also typically includes a first gas analyzer configured to measure a concentration of a gas, a second gas analyzer configured to measure a concentration of a gas, and a flow swapping device having a first input port coupled with the gas outlet port of the sample chamber, a second input port coupled with the gas source, a first output port coupled with the first gas analyzer, and a second output port coupled with the second gas analyzer,. In typical operation, responsive to a control signal the flow swapping device automatically switches between a first configuration and a second configuration, wherein in the first configuration the flow swapping device couples the first input port with the first output port, and the second output port with the second input port, and wherein in the second configuration the flow swapping device couples the first input port with the second output port, and the second input port with the first output port.

According to another aspect of the present invention, a sensor head for use in a sensor for use in a gas exchange analysis system is provided. The sensor head typically includes a sample chamber defining a measurement volume for analysis of a sample, the sample chamber having a gas inlet port coupled with a gas source, and a gas outlet port. The sensor head also typically includes a first gas analyzer configured to measure a concentration of a gas, a second gas analyzer configured to measure a concentration of a gas, and a flow swapping device having a first input port coupled with the gas outlet port of the sample chamber, a second input port coupled with the gas source, a first output port coupled with the first gas analyzer, and a second output port coupled with the second gas analyzer. In typical operation, responsive to a control signal, the flow swapping device automatically switches between a first configuration and a second configuration, wherein in the first configuration the flow swapping device couples the first input port with the first output port, and the second output port with the second input port, and wherein in the second configuration the flow swapping device couples the first input port with the second output port, and the second input port with the first output port.

According to yet another aspect of the present invention, a method is provided for measuring a concentration differential of a gas in a gas exchange analysis system having a sensor head having a sample chamber defining a measurement volume for analysis of a sample, the sample chamber having an inlet port coupled with a gas source and an outlet port. The method typically includes providing a first flow path configuration, using a flow swapping device, the first configuration having a first flow path between the output port of the sample chamber and a first gas analyzer, and a second flow path between the gas source and a second gas analyzer. The method also typically includes measuring a first concentration of a gas exiting the sample chamber at the output port using the first gas analyzer, measuring a second concentration of said gas from the gas source using the second gas analyzer, determining a first concentration differential of said gas based on the first concentration and the second concentration, and thereafter responsive to a control signal, automatically switching to a second flow path configuration using the flow swapping device, the second configuration having a third flow path between the output port of the sample chamber and the second gas analyzer, and a fourth flow path between the gas source and the first gas analyzer. In certain aspects, the method further includes measuring a third concentration of a gas exiting the sample chamber at the output port using the second gas analyzer, and measuring a fourth concentration of said gas from the gas source using the first gas analyzer. In certain aspects, the method further includes determining a second concentration differential of said gas based on the third concentration and the fourth concentration. In certain aspects, the method additionally includes determining an error based on the absolute value of the difference between the first concentration differential and the second concentration differential, said difference being divided by two.

Reference to the remaining portions of the specification, including the drawings and claims, will realize other features and advantages of the present invention. Further features and advantages of the present invention, as well as the structure and operation of various embodiments of the present invention, are described in detail below with respect to the accompanying drawings. In the drawings, like reference numbers indicate identical or functionally similar elements.

### BRIEF DESCRIPTION OF THE DRAWINGS

FIG. 1 shows the conceptual behavior of two independent gas analyzers (Analyzer 1 and Analyzer 2) and a theoretically perfect analyzer.

FIG. 2 shows an open gas exchange system with a flow swapping device in a first configuration according to one embodiment.

FIG. 3 shows the open gas exchange system with the flow swapping device in a second configuration.

FIG. 4 illustrates a method of measuring a concentration differential of a gas in the system of FIG. 2 according to one embodiment.

### DETAILED DESCRIPTION

The present invention provides systems and methods for compensating for dual analyzer offset error in a gas exchange measurement system. It also provides a sensor for use in a system and a sensor head for use in a sensor.

Broadly, there are two techniques for measuring chamber influent and effluent gas stream concentrations: 1) dynamically switching a single gas analyzer from chamber influent to effluent, and vice-versa, and 2) simultaneously measuring chamber influent and effluent streams using two independent gas analyzers.

The first technique is generally simple and compact, as only a single gas analyzer is required. Gas exchange measurements often assume steady-state conditions. For single analyzer systems, the sample conditions must be suitably stable during the time required to switch from chamber influent to effluent, or effluent to influent. In addition to the time required to affect the flow swap, transient phenomena in the analyzer must dissipate as the flow is switched from influent to effluent, and back again.

The second technique generally increases system size and complexity, as an additional analyzer is required. Two analyzer systems have faster response times during a measurement, as there are no transients associated with the flow swapping in single-analyzer systems. Unlike single analyzer systems, dual analyzer systems suffer from offsets between the two analyzers at the same gas concentration. Any offset between analyzers will appear as a non-zero difference, and this non-zero difference will be interpreted as gas exchange (e.g., photosynthesis/transpiration). Correcting for offsets between analyzers is particularly important for the accurate measurement of small exchange rates, as the offset is a more significant fraction of the concentration difference.

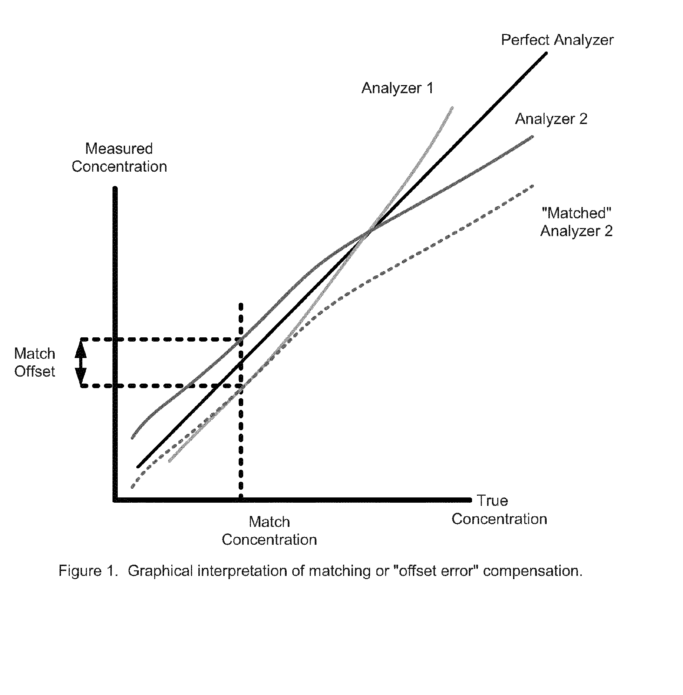

Fig. 1 shows the conceptual behavior of two independent gas analyzers (Analyzer 1 and Analyzer 2) and a theoretically perfect analyzer. Fig. 1 assumes both Analyzer 1 and Analyzer 2 receive and measure the same gas composition. For a theoretically perfect analyzer, the measured concentration is exactly equal to the true concentration. Deviations of real analyzers may be inherent to the analyzer design (time independent), the result of analyzer change or degradation (time dependent) (e.g. optical path contaminants), the result of changing environmental conditions such as temperature (time dependent), and un-attributable sources of "random" drift (time dependent).

Fig. 1 shows that, at the "match concentration", there is an offset in the measured concentration between Analyzer 1 and Analyzer 2, denoted as "Match Offset". Because both analyzers receive and measure identical gas composition, their measurements should be identical. To correct this offset error, the match offset is calculated and subsequently subtracted from Analyzer 2 values. Graphically, this shifts the unmatched Analyzer 2 response (solid line) to the Matched Analyzer 2 response (dotted line) in Fig. 1. Given that the analyzer response curves are slowly varying, and that the measured concentrations will be close to those of the "Match Concentration", the offset correction removes an erroneous source of perceived gas exchange.

It is important to note that the slope of the analyzer responses of Analyzers 1 and 2 in Fig. 1 are assumed to be close to unity. The theoretically perfect analyzer has a response slope of exactly unity. The offset correction does not account for analyzer slope errors in the vicinity of the match concentration point. Although a small absolute concentration error exists in both Analyzer 1 and Matched Analyzer 2 in Fig. 1, this absolute concentration error does not affect the difference between Analyzer 1 and Matched Analyzer 2 concentrations. Matching the analyzers has removed offset error, and the assumption of unity analyzer response slope at the match concentration assures accurate concentration difference calculations near the match concentration point. As the analyzer response slope departs from unity, or as concentrations move away from the "match concentration point", concentration difference errors become more pronounced. Thus, it is important that the analyzers be matched near the concentration at which measurements are made.

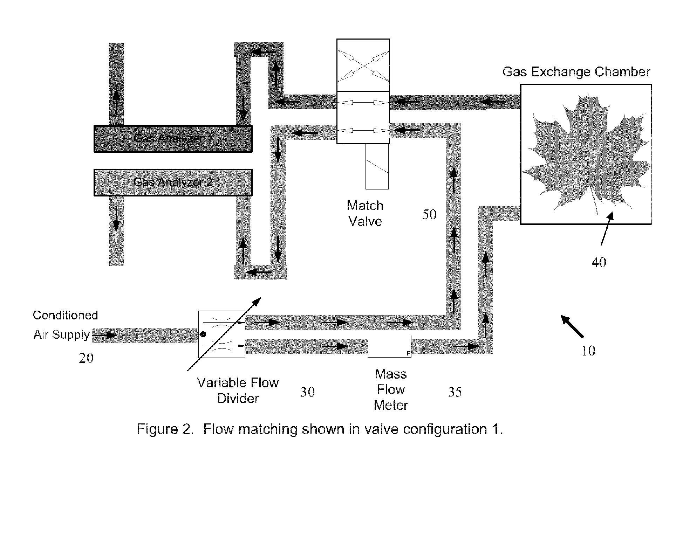

Fig. 2 shows an open gas exchange system 10 according to one embodiment. System 10 includes a conditioned air supply 20, two gas analyzers (Analyzer 1 and Analyzer 2) and an (enclosed) analysis chamber 40, in which a sample under investigation is placed, and a flow swapping device 50. Conditioned air supply 20 includes one or more gas sources and gas conditioning equipment. For example, in the context of photosynthesis and transpiration measurements, gas sources would include reservoirs of CO₂ and H₂O, and conditioning equipment for conditioning each gas concentration. Analysis chamber 40 provides a known measurement volume for analysis of a sample. Chamber 40 includes a gas inlet port coupled with the air supply 20 and a gas outlet port, coupled with match valve 50. A sample typically includes a leaf or plant material, but it may include any other material for which measurement of gas exchange characteristics is desired. The conditioned air supply 20 delivers a stable gas concentration (e.g., stable CO₂ and H₂O concentrations) to the system. In one embodiment, the components shown in Fig. 2 are included in a sensor head (with the exception of air supply 20) remote from a console (which may include the air supply and other components such as an intelligence module); a system including a remote sensor head provides portability to, and ease of manipulation by, a user.

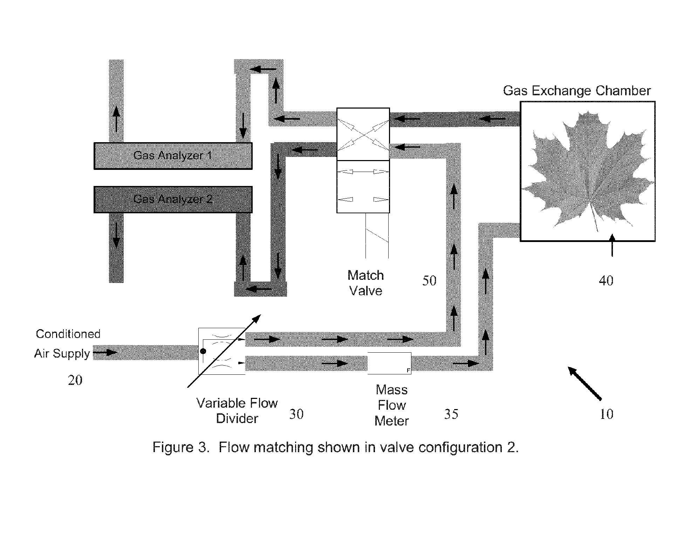

Various conduits and connectors provide fluid flow paths coupling the various system components as shown. For example, in one embodiment, the conditioned air supply from air supply 20 is split into two streams by variable flow divider 30. A controlled and known mass flow is delivered to the gas inlet port of chamber 40, via flow meter 35 and the flow remainder bypasses the leaf chamber 40 and is provided to flow swapping device 50. The gas outlet port of chamber 40 is also fluidly coupled with flow swapping device 50 so as to enable chamber effluent to be delivered to flow swapping device 50. Flow swapping device 50 in certain aspects includes a match valve as shown, having 2 possible configurations. In Fig. 2, flow swapping device ("match valve") 50 is shown in a first configuration with the chamber influent delivered to Gas Analyzer 2, and the chamber effluent delivered to Gas Analyzer 1. At any arbitrary time, the configuration of the flow swapping device 50 can be switched (e.g., in response to a manual, or automatically generated, control signal) to a second configuration as shown in Fig. 3. With the flow swapping device in this second configuration, chamber influent is delivered to Gas Analyzer 1, and chamber effluent is delivered to Gas Analyzer 2. The gas analyzers (analyzer 1 and analyzer 2) might each include an Infra-Red Gas Analyzer (IRGA), as is known in the art, or other gas analyzer. An intelligence module (not shown), e.g., processor or computer system, is coupled with the gas analyzers to control operation of system 10 and the gas analyzers and to receive data signals representative of the gas concentration measurements from the gas analyzers.

By changing the configuration of the match valve, the gas analyzer initially connected to the chamber effluent is connected to the chamber influent. Conversely, the gas analyzer initially connected to the chamber influent is connected to the chamber effluent. By changing the valve configuration, the gas streams measured by each gas analyzer are effectively "swapped."

In Fig. 2, the concentration of the conditioned air supply (influent) is measured by Analyzer 2. Just prior to the "swap", the concentration measured by Analyzer 2 is recorded as C_{b}(t₀). The flows are then swapped to the configuration of Fig. 3. After this swap, there is a transient times t_{d} in which the respective gases flush through the gas analyzers. After this initial transient, the concentration measured by Analyzer 1 is recorded as Cₐ(t₀+t_{d}). Because the conditioned air supply was delivered to Analyzer 2 before the swap (t < to), and was delivered to analyzer 1 after the swap t>t0, the difference C_{b}(t₀)-Ca(t₀+t_{d}) represents the analyzer offset, assuming the conditioned air supply concentrations were stable during the time t₀ < t < t₀+t_{d}. This offset value is then used to correct all subsequent measurements, until the next match interval.

Existing instruments such as the LI-COR LI-6400 and Walz GFS-3000 instruments use a *series* matching method. That is, the analyzers are arranged in series during the matching process, and both see the identical gas stream at an identical flow rate. This operational state does not allow chamber influent and effluent concentrations to be simultaneously measured. These systems have a specific match mode state during which no gas exchange measurements can be made. *Series* matching requires approximately two times the analyzer flush time (t_{d} above) to complete a matching cycle. There is an initial delay (t_{d}) while the analyzers come to equilibrium in the match-mode, and a second delay time (t_{d}) during which transients dissipate after the analyzers are restored to their normal operating configuration.

Embodiments disclosed herein advantageously reduce the time for analyzer matching compared to the series matching used by existing instruments such as the LI-COR LI-6400 and Walz GFS-3000 instruments, by a factor of about 2 or more. An initial delay t_{d} is required when the match valve configuration is changed, but after this s delay time, the present embodiments are capable of immediately resuming measurements. Single analyzer systems do not require an offset correction or match mode, but do require a similar delay time of t_{d} to account for transients introduced by switching the analyzer from effluent to influent, or vice-versa.

In the embodiments disclosed herein, the gas analyzers do not receive an identical gas stream. Thus, it is important that the gas concentration of the conditioned air supply be stable during the matching process. Any change in concentration of the conditioned air supply would be interpreted as additional analyzer offset. This erroneous analyzer offset would then be applied inappropriately to future offset calculations.

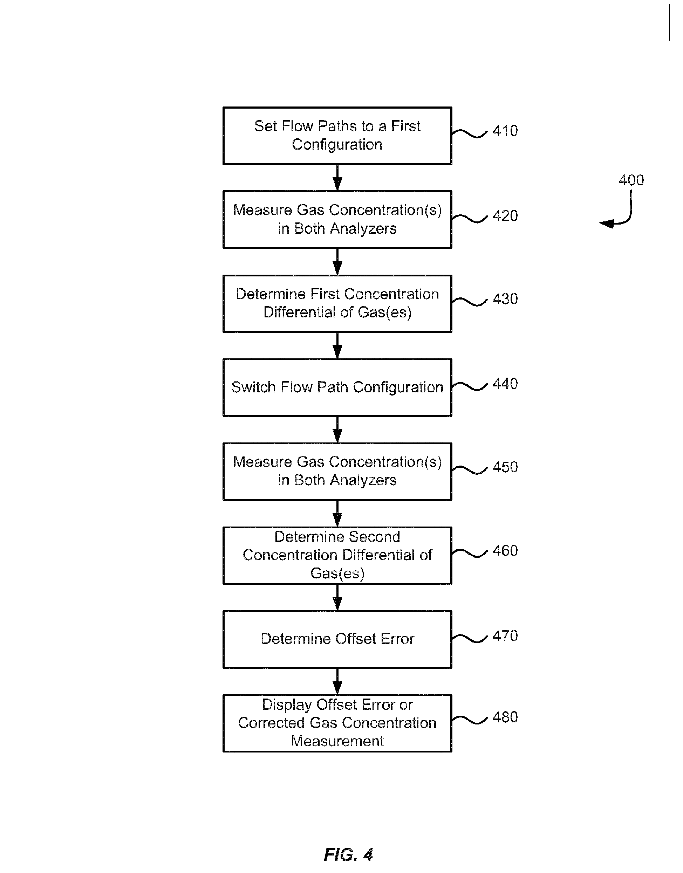

Fig. 4 illustrates a method 400 of measuring a concentration differential of a gas in gas exchange measurement system 10 according to one embodiment. In step 410, the flow path configuration is set to a first configuration by setting the flow swapping device to one of the two configurations, e.g., defining a first flow path between the output port of the sample chamber 40 and gas analyzer 1, and a second flow path between the gas source (e.g., flow divider 30) and gas analyzer 2 as shown in Fig. 2. In step 420, the gas concentrations of the flows in each of the gas analyzers are measured. For example, a first concentration of the gas exiting the sample chamber (chamber effluent) is measured using gas analyzer 1 and a second concentration of the gas from the gas source is measured using the gas analyzer 2. In step 430, a first concentration differential of the gas based on the first concentration and the second concentration is determined. In step 440, the flow path configuration is switched to a second configuration by setting the flow swapping device to the other of the two configurations, e.g., defining a third flow path between the output port of the sample chamber 40 and gas analyzer 2, and a fourth flow path between the gas source (e.g., flow divider 30) and gas analyzer 1 as shown in Fig. 3. In certain aspects, a switching signal is provided to the flow swapping device to automatically switch the flow configuration at the desired time. It should also be understood that the order of use of the first and second configurations of the flow swapping device as determined in steps 410 and 440 could be interchanged.

In step 450, the gas concentrations of the flows in each of the gas analyzers in the second flow path configuration are measured. For example, a third concentration of the gas exiting the sample chamber (chamber effluent) is measured using gas analyzer 2 and a fourth concentration of the gas from the gas source is measured using the gas analyzer 1. In step 460, a second concentration differential of the gas based on the third measured concentration and the fourth measured concentration is determined. In step 470, an offset error is determined based on the first concentration differential and the second concentration differential determined in steps 430 and 460. In one embodiment, for example, an offset error based on the absolute value of the difference between the first concentration differential and the second concentration differential is determined, with the difference being divided by two. In step 480, data representative of the offset error is displayed on a monitor or other display device or otherwise further processed or used to generate (and display) corrected gas concentration measurements.

Steps 430, 460 and 470 can be performed using an intelligence module such as a processor or computer system that is integrated in the sensor head and/or in the console of a gas analysis system and/or in a remote computer system that is communicably coupled with the gas analysis system. Code for implementing the various calculation and control steps can be stored on a memory coupled with, or otherwise accessible by, the intelligence module or provided on any tangible computer readable medium such as a CD, DVD, hard disk, etc.

While the invention has been described by way of example and in terms of the specific embodiments, it is to be understood that the invention is not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

## Claims

1. A gas exchange analysis system comprising a sensor, the sensor comprising:
a sample chamber defining a measurement volume for analysis of a sample, the sample chamber having a gas inlet port coupled with a gas source, and a gas outlet port;
a first gas analyzer configured to measure a concentration of a gas;
a second gas analyzer configured to measure a concentration of a gas; and
a flow swapping device having a first input port coupled with the gas outlet port of the sample chamber, a second input port coupled with the gas source, a first output port coupled with the first gas analyzer, and a second output port coupled with the second gas analyzer,
wherein responsive to a control signal, the flow swapping device automatically switches between a first configuration and a second configuration,
wherein in the first configuration the flow swapping device couples the first input port with the first output port, and the second output port with the second input port, and
wherein in the second configuration the flow swapping device couples the first input port with the second output port, and the second input port with the first output port.

2. The sensor of claim 1, wherein the first gas analyzer and the second gas analyzer each include an IR Gas analyzer.

3. The sensor of claim 1, wherein said first and second gas analyzers are arranged to measure gases including CO₂ or H₂O.

4. A sensor for use in a gas exchange analysis system, the sensor comprising:
a sample chamber defining a measurement volume for analysis of a sample, the sample chamber having a gas inlet port coupled with a gas source, and a gas outlet port;
a first gas analyzer configured to measure a concentration of a gas;
a second gas analyzer configured to measure a concentration of a gas; and
a flow swapping device having a first input port coupled with the gas outlet port of the sample chamber, a second input port coupled with the gas source, a first output port coupled with the first gas analyzer, and a second output port coupled with the second gas analyzer,
wherein responsive to a control signal, the flow swapping device automatically switches between a first configuration and a second configuration,
wherein in the first configuration the flow swapping device couples the first input port with the first output port, and the second output port with the second input port, and
wherein in the second configuration the flow swapping device couples the first input port with the second output port, and the second input port with the first output port.

5. The sensor of claim 4, wherein said first and second gas analyzers are arranged to measure gases including CO₂ or H₂O.

6. The sensor of claim 4, wherein the first gas analyzer and the second gas analyzer each include an IR Gas analyzer.

7. A sensor head for use in a sensor for use in a gas exchange analysis system, the sensor head comprising:
a sample chamber defining a measurement volume for analysis of a sample, the sample chamber having a gas inlet port coupled with a gas source, and a gas outlet port;
a first gas analyzer configured to measure a concentration of a gas;
a second gas analyzer configured to measure a concentration of a gas; and
a flow swapping device having a first input port coupled with the gas outlet port of the sample chamber, a second input port coupled with the gas source, a first output port coupled with the first gas analyzer, and a second output port coupled with the second gas analyzer,
wherein responsive to a control signal, the flow swapping device automatically switches between a first configuration and a second configuration,
wherein in the first configuration the flow swapping device couples the first input port with the first output port, and the second output port with the second input port, and
wherein in the second configuration the flow swapping device couples the first input port with the second output port, and the second input port with the first output port.

8. A method of measuring a concentration differential of a gas in a gas exchange analysis system having a sensor having a sample chamber defining a measurement volume for analysis of a sample, the sample chamber having an inlet port coupled with a gas source and an outlet port, the method comprising:
providing a first flow path configuration, using a flow swapping device, the first configuration having a first flow path between the output port of the sample chamber and a first gas analyzer, and a second flow path between the gas source and a second gas analyzer;
measuring a first concentration of a gas exiting the sample chamber at the output port using the first gas analyzer;
measuring a second concentration of said gas from the gas source using the second gas analyzer; and
determining a first concentration differential of said gas based on the first concentration and the second concentration, and thereafter
responsive to a control signal, automatically switching to a second flow path configuration using the flow swapping device, the second configuration having a third flow path between the output port of the sample chamber and the second gas analyzer, and a fourth flow path between the gas source and the first gas analyzer.

9. The method of claim 8, further including:
measuring a third concentration of a gas exiting the sample chamber at the output port using the second gas analyzer; and
measuring a fourth concentration of said gas from the gas source using the first gas analyzer.

10. The method of claim 9, further including determining a second concentration differential of said gas based on the third concentration and the fourth concentration.

11. The method of claim 10, further including determining an error based on the absolute value of the difference between the first concentration differential and the second concentration differential, said difference being divided by two.

12. The method of claim 8, wherein said gas measured by said first and second gas analyzers includes CO₂ or H₂O.
